# EUROPÄISCHE PATENTSCHRIFT

(11) **EP 1 637 026 B1**
(45) Veröffentlichungstag und Bekanntmachung des Hinweises auf die Patenterteilung: **28.11.2007**
(21) Anmeldenummer: 05020045.0
(22) Anmeldetag: 15.09.2005
(51) Int. Cl.: A01C 7/10, A01C 7/04

(54) **Elektronische Überwachungseinrichtung**
Electronic monitoring device
Dispositif électronique de surveillance

(30) Priorität: 21.09.2004 DE 102004045654
(43) Veröffentlichungstag der Anmeldung: 22.03.2006
(73) Patentinhaber: Amazonen-Werke H. Dreyer GmbH & Co. KG, 49205 Hasbergen (DE)
(72) Erfinder: Scheufler, Bernd, Dr., 49205 Hasbergen (DE); Marquering, Johannes, Dr., 49176 Borgloh (DE)

(56) Entgegenhaltungen:
- GB-A- 1 501 481
- US-A- 4 159 064
- US-A1- 2002 170 476

## Beschreibung

Die Erfindung betrifft eine elektronische Überwachungseinrichtung gemäß des Oberbegriffes des Patentanspruches 1.

Eine derartige Überwachungseinrichtung ist durch die DE 198 45 860 A1 bekannt. Bei dieser Überwachungseinrichtung ist im Bereich des Vereinzelungsorgans ein als Optogeber ausgebildeter Sensor angeordnet, mittels welchem in Verbindung mit einem in einer elektronischen Einrichtung abgespeicherten Auswerteprogramm der Gleichmäßigkeitsgrad der Vereinzelung der Saatkörner ermittelt werden kann. Mittels dieser Daten wird der Gleichmäßigkeitsgrad im Bereich des Vereinzelungsorgans ermittelt. Von dem Vereinzelungsorgan aus werden die vereinzelten Saatkörner über Förderleitungen Saatgutablagevorrichtung zugeführt, über welche die Saatkörner im Boden abgelegt werden. Entsprechend des Gleichmäßigkeitsgrades wird über ein motorisches Einstellmittel das Abstreiferelement der Vereinzelungsorgane entsprechend durch die elektronische Überwachungseinrichtung eingestellt. Die Einstellung des Abstreiferelementes erfolgt ausschließlich entsprechend des von dem Auswerteprogramm ermittelten Gleichmäßigkeitsgrades aufgrund der von dem Optogeber gelieferten Daten.

Eine weitere Überwachungseinrichtung mit den Merkmalen des Oberbegriffes des Anspruchs 1 ist aus der US-A-4 159 064 bekannt.

Der Erfindung liegt die Aufgabe zugrunde, die Einstellung des Abstreiferelementes schneller an die tatsächlichen Gegebenheiten anpassen zu können.

Diese Aufgabe wird erfindungsgemäß durch die kennzeichnenden Merkmale des Anspruchs 1 gelöst. Infolge dieser Maßnahmen wird die Grundvoraussetzung dafür geschaffen, dass aufgrund der in der Überwachungseinrichtung hinterlegten Zusammenhänge zwischen Drehzahl des Vereinzelungsorgans und Abstreiferstellung das Abstreiforgan sehr schnell bei Veränderung der Trommeldrehzahl nachgestellt werden kann. Somit kann die Überwachungseinrichtung in Abhängigkeit von der Drehzahl des Vereinzelungsorgans die passende Abstreiferstellung anwählen und das Abstreifelement entsprechend einstellen. Die Trommeldrehzahl ist bei einer vorgegebenen Körnerzahl pro Quadratmeter direkt proportional der Fahrgeschwindigkeit. Dies bedeutet, dass bei einer Änderung der Fahrgeschwindigkeit sich auch die Trommeldrehzahl ändert. Es ist dann sehr wichtig, das sehr schnell die Abstreiferstellung der entsprechenden Trommeldrehzahl angepasst werden kann, um eine gute Vereinzelungsqualität sicher zu stellen.

Um für die einzelnen auszubringenden Saatgutarten den Abstreifer entsprechend optimal einstellen zu können, um eine optimierte Vereinzelung der entsprechenden Saatgüter zu erreichen, sind im Speicher der Überwachungseinrichtung optimierte Zusammenhänge zwischen Abstreiferstellung und den Drehzahlen der Vereinzelungsorgane für verschiedene Saatgüter (Saatgutarten) zur Erreichung der festgelegten Vereinzelungsqualität hinterlegt.

Um zu erreichen, dass der Abstreifer entsprechend den jeweiligen Verhältnissen optimal eingestellt werden kann, also quasi an eine lernfähige Abstreifereinstellung ermöglicht wird, so dass die in dem Speicher der Überwachungseinrichtung hinterlegten Zusammenhänge den aktuellen Gegebenheiten angepasst werden können, sind die Maßnahmen des Anspruches 3 vorgesehen.

Um zu gewährleisten, dass mit der Einzelkornsämaschine bis zu möglichst hohen Fahrgeschwindigkeiten und somit einer großen Flächenleistung noch eine ausreichend gute Vereinzelung erhalten bleibt, ist vorgesehen, dass in dem Speicher die maximal zulässigen Drehzahlen der Vereinzelungsorgane für verschiedene Saatgüter (Saatgutarten) hinterlegt sind und dass bei Erreichen und/oder überschreiten der hinterlegten max. Drehzahlen der Vereinzlungsorgane ein Alarm ausgelöst wird. Infolge dieser Maßnahmen wird ein Alarm ausgelöst, wenn die Geschwindigkeit zu hoch wird, das heißt, wenn die Trommeldrehzahl in einen Bereich gelangt oder zu gelangen droht, in welchem keine ausreichend genaue Vereinzelung mehr möglich ist, wird ein Alarm ausgelöst, damit diese unzulässige Drehzahl nicht überschritten wird und die genaue Vereinzelung erhalten bleibt.

Eine sehr zeitnahe und an die aktuellen Vereinzelungsgegebenheiten angepasste Einstellung des Abstreifers wird durch die Maßnahmen gemäß des Anspruchs 5 erreicht.

Um zu erreichen, dass direkt zu Beginn des Ausbringvorganges eine möglichst gute Abstreifereinstellung für das jeweils auszubringende Saatgut vorgegeben ist, um eine möglichst gute Vereinzelungsqualität zu erreichen, ist vorgesehen, dass über eine Eingabevorrichtung in die Überwachungseinrichtung das auszubringende Saatgut oder die Saatgutart eingebbar sind. Entsprechend der hinterlegten Zusammenhänge von Abstreiferstellung zu Drehzahl des Vereinzlungsorgans für die verschiedenen Saatgutarten wird die Abstreifereinstellung vorgenommen.

Eine an das jeweilige Saatgut angepasste Abstreifereinstellung zur Erreichung einer guten Vereinzlungsqualität kann dadurch erreicht werden, dass aufgrund der in dem Speicher hinterlegten Daten das Auswerteprogramm aufgrund der in von dem Sensor ermittelten Signale erkennt, welche Saatgutart ausgebracht wird bzw. welche Kornform das Saatgut hat, uns dass entsprechend dieser ermittelten Daten der Abstreifer über das Stellelement aufgrund der übermittelten Einstellsignale einstellbar ist und die maximale Drehzahl des Vereinzelungsorgans ermittelt wird.

Weitere Einzelheiten der Erfindung sind der Beispielsbeschreibung und den Zeichnungen zu entnehmen.

### Hierbei zeigen

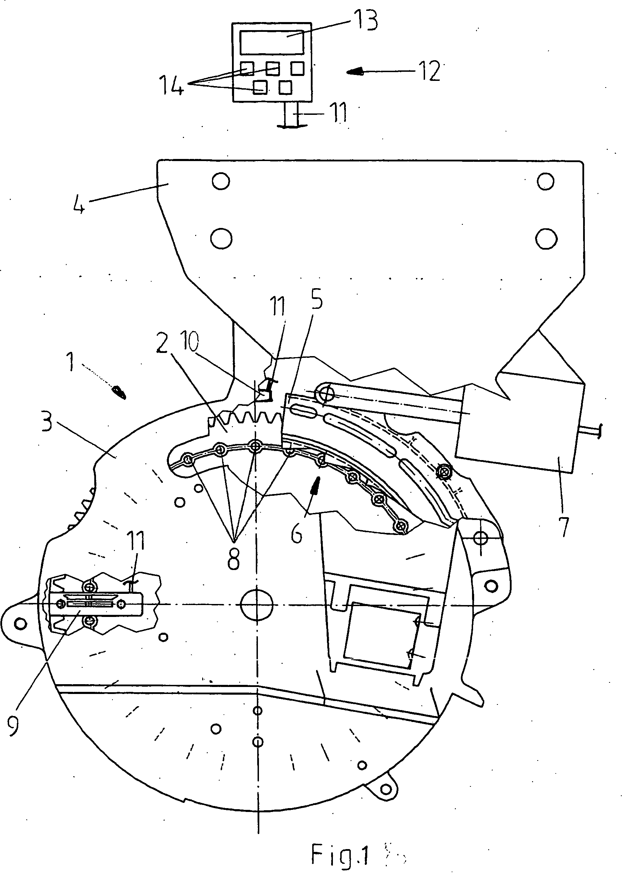

- Fig. 1: ein Vereinzlungsaggregat einer Einzelkornsämaschine mit elektronischer Überwachungseinrichtung in Teilansicht und Seitenansicht und
- Fig. 2: das Flussdiagramm der elektronischen Überwachungseinrichtung.

Am Rahmen einer Einzelkornsämaschine sind in bekannter, daher nicht näher dargestellter Weise beabstandet zueinander die Einzelkornsäaggregate 1 mit einem Vereinzlungsorgan 2 angeordnet. Das Vereinzelungsorgan 2 ist als Vereinzelungsscheibe ausgebildet und in dem Gehäuse 3 des Einzelkornsäaggregates 1 drehbar gelagert. Das Vereinzelungsorgan 2 wird mittels eines Antriebes, beispielsweise eines Bodenradantriebes mit einem Übersetzungsgetriebe oder einem regelbaren elektrischen oder hydraulischen Antriebsmotor angetrieben. Das Gehäuse 3 mündet im oberen Bereich in einem Vorratsbehälter 4 zur Aufnahme des Saatgutvorrates. Jeder Vereinzelungsscheibe 2 ist ein Abstreiferelement 5 einer Abstreifereinrichtung 6 zugeordnet, welches entsprechend des auszubringenden Saatgutes über das als Einstellmotor 7 ausgebildete Einstellelement in seiner Relativlage zu dem Vereinzelungslöchern 8 der Vereinzelungsscheibe 2 einzustellen ist. An dem Gehäuse 3 des Einzelkornsäaggregates 1 schließt sich jeweils der Vereinzelungsscheibe 2 zugeordnete zu einer nicht dargestellten Saatgutablegeeinrichtung führende, vorzugsweise pneumatisch beaufschlagten Transportleitung an, über welche die über die von der Vereinzelungsscheibe 2 vereinzelten Saatkörner der Saatgutablegevorrichtung zugeführt wird.

Das Vereinzelungsorgan kann als einzelne in einem Gehäuse gelagerte Vereinzelungsscheibe 2, wie im Ausführungsbeispiel dargestellt, ausgebildet sein, es kann jedoch auch aus einer rotierenden Trommel, auf welcher mehrere Reihen von Vereinzelungslöchern angeordnet sind, ausgestaltet sein.

Dem Vereinzelungsorgan 2 ist ein Sensor 9, der im Ausführungsbeispiel als Optosensor ausgebildet ist, zur Erfassung der vereinzelten und an den Vereinzelungslöchern 8 anhaftenden Saatkörnern zugeordnet, mittels welchem die Vereinzlungsqualität, wie in der DE 198 45 860 A1 beschrieben, ermittelt werden kann. Des weiteren ist dem Vereinzelungsorgan 2 ein Drehzahlsensor 10 zur Erfassung der Drehzahl des Vereinzelungsorgans 2 zugeordnet.

Der Drehzahlsensor 10 und der Sensor 9 zur Ermittlung der Vereinzelungsqualität sind mittel Übertragungsleitungen 11 mit der elektronischen Auswerteeinrichtung 12, die als Bordcomputer ausgebildet ist, verbunden. Der Bordcomputer 12 weist das Display 13 und Eingabetasten 14 bzw. elektronische Eingabevorrichtungen auf.

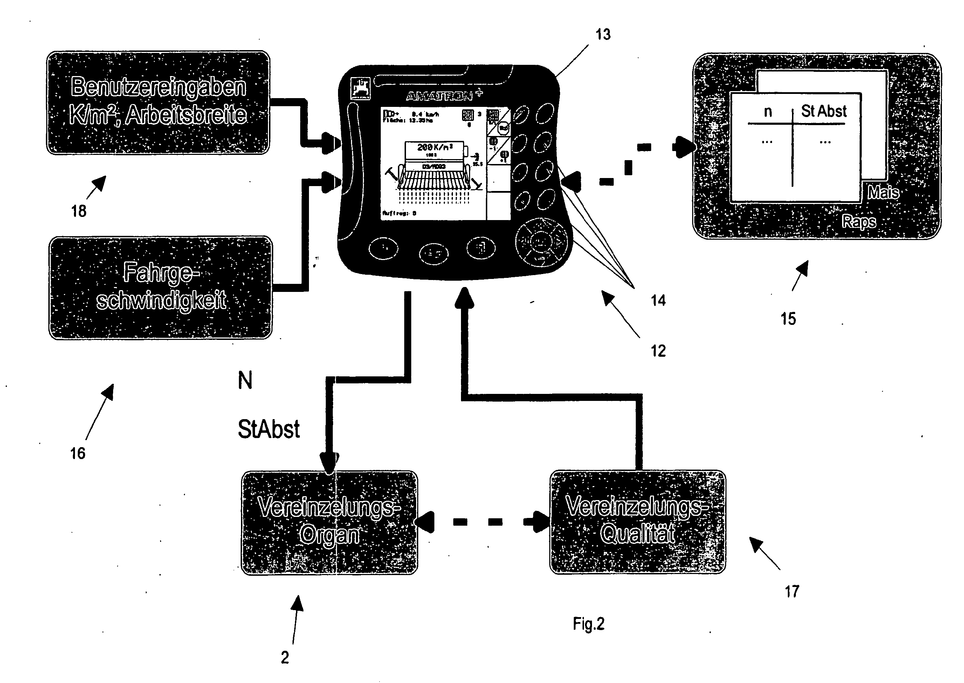

In dem Speicher des Bordcomputers 12 sind optimierte Zusammenhänge 15 zwischen Abstreiferstellung und den Drehzahlen des Vereinzelungsorgans 2 für verschiedene Saatgüter bzw. Saatgutarten zur Erreichung der festgelegten Vereinzelungsqualität hinterlegt, wie das Flussdiagramm in der Fig. 2 zeigt. Diese Zusammenhänge sind in empirischen Versuchsreihen ermittelt worden.

Des weiteren sind in dem Speicher des Bordcomputers 12 die max. zulässigen Drehzahlen des Vereinzelungsorgans für die verschiedenen Saatgüter bzw. Saatgutarten hinterlegt. Bei Erreichen bzw. Überschreiten der hinterlegten max. Drehzahlen des Vereinzelungsorgans 2 wird von dem Bordcomputer 12 ein Alarm ausgelöst. Dies kann beispielsweise in optischer oder akustischer Weise erfolgen.

Des weiteren ist ein Sensor zur Ermittlung der Fahrgeschwindigkeit bzw. der pro Zeiteinheit zurückgelegten Wegstrecke vorhanden, welcher Informationen über die Fahrgeschwindigkeit 16, wie das Flussdiagramm in Fig. 2 zeigt, an den Bordcomputer übermittelt.

Über die Eingabevorrichtung 14 sind in die elektronische Überwachungseinrichtung 12 das auszubringende Saatgut , Informationen über das Saatgut oder die Saatgutart eingebbar, so dass der Bordcomputer 12 die entsprechende Abstreiferstellung in Abhängigkeit der Drehzahl entsprechend der ausgebrachten Saatgutart einstellen kann. Hierbei kann in dem der Bordcomputer-Einstellsignale an den Einstellmotor 7 zur entsprechenden Einstellung des Abstreiferelementes 5 übermittelt. das in dem Speicher hinterlegte Programm aufgrund der hinterlegten Daten aufgrund der von dem Sensor 9 ermittelten Signale erkennen, welche Saatgutart ausgebracht wird bzw. welche Kornform das Saatgut hat. Entsprechend dieser ermittelten Daten werden von dem Bordcomputer 12 Einstellsignale an das Einstellelement 7 übermittelt, so dass der Stellmotor 7 den Abstreifer 5 entsprechend zu den Vereinzelungslöchern 8 eingestellt wird.

Zu Beginn des Ausbringvorganges werden durch den Bordcomputer 12 entsprechend dem Speicher hinterlegten Zusammenhänge 15 zwischen Abstreiferstellung und Drehzahl entsprechend der aktuell ermittelten Drehzahl des Vereinzelungsorgans 2 die Abstreifereinrichtung 5 durch das Stellelement 7 eingestellt, in dem entsprechende Einstellsignale von dem Bordcomputer 12 an das Stellelement 7 übermittelt werden. Während des Ausbringvorganges wird die tatsächliche Vereinzelungsqualität 17 des Vereinzelungsorgans 2 durch das in dem Speicher des Bordcomputers 12 hinterlegte Programm in welchem die hinterlegten Zusammenhänge 15 zwischen Abstreiferstellung und den Drehzahlen des Vereinzelungsorgans 2 hinterlegt sind ermittelt und bei Überschreitung einer festgelegten Toleranzgrenze der Vereinzelungsqualität 16 wird der Zusammenhang 15 zwischen Abstreiferstellung und Drehzahl der aktuell ermittelten Vereinzelungsqualität 16 angepasst. Aufgrund des aktuellen Drehzahlwertes in Verbindung mit der ermittelten Vereinzelungsqualität 16 wird die Abstreiferstellung von dem Bordcomputer 12 korrigiert. Für das Saatgut wird dann während des aktuellen Vorganges mit den aktuellen Zusammenhängen zwischen Drehzahl und Abstreiferstellung entsprechend des aktuellen Drehzahlwertes die Abstreiferstellung korrigiert und während des Bearbeitungsvorganges entsprechend von dem Bordcomputer 12 eingeregelt. Dieser Vorgang der Überprüfung der Vereinzelungsqualität 16 und der evtl. erforderlichen Aktualisierung der Zusammenhänge zwischen Drehzahlwert und Abstreiferstellung wird fortlaufend von dem Bordcomputer 12 vorgenommen.

Wie das Flussdiagramm in Fig. 2 zeigt wird in dem Bordcomputer 12 über die Eingabetasten 14 oder andere Eingabeeinrichtungen die Benutzereingaben 18 Körnerzahl pro Quadratmeter und die Arbeitsbreiten eingegeben. Des weiteren ist in dem Bordcomputer 12 in dem Speicher der Zusammenhang 15 bzw. die Zusammenhänge zwischen verschiedenen Drehzahlen und Abstreiferstellung für verschiedene Saatgutarten hinterlegt. Die Drehzahl des Vereinzelungsorgans 2 ist direkt proportional zur Fahrgeschwindigkeit 16. Aufgrund der von dem Sensor 9 übermittelten Daten wird aufgrund des in dem Speichers des Bordcomputers 12 hinterlegten Auswerteprogramms die Vereinzelungsqualität 17 ermittelt. Entsprechend der Vereinzelungsqualität 17 wird in Abhängigkeit der Drehzahl des Vereinzelungsorgans 2 das Abstreiferelement 5 eingestellt. Bei überschreiten der vorgegebenen Toleranzgrenzen der Vereinzelungsqualität 17 erfolgt eine entsprechende Anpassung der Zusammenhänge 15 zwischen Drehzahl und Abstreiferstellung. Die Einstellung des Abstreiferelementes 5 wird von dem Bordcomputer 12 entsprechend der aktualisierten Zusammenhänge 15 vorgenommen.

In dem Speicher des Bordcomputers 12 sind die max. zulässigen Drehzahlen des Vereinzelungsorgans 2 für verschiedene Saatgüter hinterlegt. Bei Erreichen bzw. Überschreiten der hinterlegten max. Drehzahl des Vereinzelungsorgans 2 wird von dem Bordcomputer 12 ein Alarm, beispielsweise in akustischer oder optischer Weise ausgelöst, damit die Fahrgeschwindigkeit entsprechend abgesenkt wird, um innerhalb der zulässigen Drehzahlen des Vereinzelungsorgans 2 zu gelangen. Die Drehzahl des Vereinzelungsorgans ist direkt proportional zur Fahrgeschwindigkeit.

## Patentansprüche

1. Elektronische Überwachungseinrichtung für die Saatgutausbringung mit einer Einzelkornsämaschine mit Abstreifereinrichtungen aufweisenden Vereinzelungsorganen und von den Vereinzelungsorganen zu Saatgutablegevorrichtung führenden, vorzugsweise pneumatisch beaufschlagten Transportleitungen, wobei zumindest einem der Vereinzelungsorgane ein Sensor zur Erfassung der vereinzelten Saatkörner zugeordnet ist, wobei der Sensor mit einem in dem Speicher der Überwachungseinrichtung hinterlegten Auswerteprogramm zusammenwirkt, wobei mittels des Auswerteprogramms die Vereinzelungsqualität des Vereinzelungsorgans ermittelbar ist, wobei zumindest ein Drehzahlsensor (10) zur Erfassung der Drehzahl zumindest eines der Vereinzelungsorgane (2) vorgesehen ist, wobei der Drehzahlsensor (10) Messsignale an die Überwachungseinrichtung (12) übermittelt, **dadurch gekennzeichnet, dass** der Abstreifereinrichtung (6) zumindest ein motorisches Stellelement (7) zugeordnet ist, welches von der Überwachungseinrichtung (12) ansteuerbar ist, dass mittels des motorischen Stellelementes (7) durch die Überwachungseinrichtung (12) zu Beginn des Ausbringvorgangs entsprechend der im Speicher der Überwachungseinrichtung (12) hinterlegten Zusammenhänge (15) zwischen Abstreiferstellung und Drehzahl entsprechend der ermittelten aktuellen Drehzahl des Vereinzelungsorgans (2) die Abstreifereinrichtung einstellbar ist.

2. Überwachungseinrichtung nach Anspruch 1, **dadurch gekennzeichnet, dass** im Speicher der Überwachungseinrichtung (12) optimierte Zusammenhänge (15) zwischen Abstreiferstellung und den Drehzahlen der Vereinzelungsorgane (2) für verschiedene Saatgüter (Saatgutarten) zur Erreichung der festgelegten Vereinzelungsqualität (17) hinterlegt sind.

3. Überwachungseinrichtung nach Anspruch 1, **dadurch gekennzeichnet, dass** nach Ermittlung der tatsächlichen Vereinzelungsqualität (17) des Vereinzelungsorgans (2) durch das Auswerteprogramm der im Speicher der Überwachungseinrichtung (12) hinterlegten Zusammenhänge (15) zwischen Abstreiferstellung und den Drehzahlen des Vereinzelungsorgans (2) bei Überschreitung einer festgelegten Toleranzgrenze aktualisiert wird, und dass aufgrund des aktualisierten Drehzahlwertes die Abstreiferstellung korrigiert wird.

4. Überwachungseinrichtung nach einem oder mehreren der vorstehenden Ansprüche, **dadurch gekennzeichnet, dass** in dem Speicher die maximal zulässigen Drehzahlen der Vereinzelungsorgane (2) für verschiedene Saatgüter (Saatgutarten) hinterlegt sind, und dass bei Erreichen und/oder überschreiten der hinterlegten max. Drehzahlen der Vereinzelungsorgane (2) ein Alarm ausgelöst wird.

5. Überwachungseinrichtung nach einem oder mehreren der vorstehenden Ansprüche, **dadurch gekennzeichnet, dass** entsprechend der Drehzahl der Vereinzelungsorgane (2) die Einstellung des Abstreifers (5) aufgrund der hinterlegten Zusammenhänge (15) zwischen Abstreiferstellung und Drehzahl der Vereinzelungsorgane (2) mittels des dem Abstreifer (5) zugeordneten motorischen Stellelementes (7) entsprechend der übermittelten Einstellsignale vornehmbar ist.

6. Überwachungseinrichtung nach einem oder mehreren der vorstehenden Ansprüche, **dadurch gekennzeichnet, dass** über eine Eingabevorrichtung (14) in die Überwachungseinrichtung (12) das auszubringende Saatgut oder die Saatgutart eingebbar sind.

7. Überwachungseinrichtung nach einem oder mehreren der vorstehenden Ansprüche, **dadurch gekennzeichnet, dass** aufgrund der in dem Speicher hinterlegten Daten das Auswerteprogramm aufgrund der von dem Sensor (9) ermittelten Signale erkennt, welche Saatgutart ausgebracht wird bzw. welche Kornform das Saatgut hat, und dass entsprechend dieser ermittelten Daten der Abstreifer (5) über das Stellelement (7) aufgrund der übermittelten Einstellsignale einstellbar ist und die maximale Drehzahl des Vereinzelungsorgans (2) ermittelt wird.

## Claims

1. Electronic monitoring device for the discharging of seed material using a single grain seed drill with members for separating into singles, which include scraper devices, and supply lines, which are preferably impinged upon pneumatically and lead from the members for separating into singles to the seed material depositing apparatus, wherein a sensor for detecting the singled-out grains of seed is associated with at least one of the members for separating into singles, wherein the sensor interacts with an evaluation program that is deposited in the memory of the monitoring device, wherein the quality of the separating into singles of the member for separating into singles is determinable by means of the evaluation program, wherein at least one speed sensor (10) is provided to detect the speed at least of one of the members for separating into singles (2), wherein the speed sensor (10) transmits measuring signals to the monitoring device (12), **characterised in that** at least one motor-driven control member (7) is associated with the scraper device (6), the said control member being activatable by the monitoring device (12), **in that** the scraper device is adjustable by means of the motor-driven control member (7) through the monitoring device (12) at the beginning of the discharging procedure corresponding to the correlations (15), deposited in the memory of the monitoring device (12), between scraper position and speed in accordance with the determined current speed of the member for separating into singles (2).

2. Monitoring device according to claim 1, **characterised in that** optimised correlations (15) between scraper position and the speeds of the members for separating into singles (2) for different seed materials (types of seed material) are deposited in the memory of the monitoring device (12) to achieve the established quality (17) of the separating into singles.

3. Monitoring device according to claim 1, **characterised in that** once the actual quality (17) of the separating into singles of the member for separating into singles (2) has been determined by the evaluation program, if a fixed tolerance limit is exceeded, the correlations (15), deposited in the memory of the monitoring device (12), between scraper position and the speeds of the member for separating into singles (2), are up-dated, and **in that** the scraper position is corrected in view of the up-dated speed value.

4. Monitoring device according to one or more of the preceding claims, **characterised in that** the maximum permissible speeds of the members for separating into singles (2) for different seed materials (types of seed material) are stored in the memory , and **in that** an alarm is triggered when the stored maximum speeds of the members for separating into singles (2) are reached and/or exceeded.

5. Monitoring device according to one or more of the preceding claims, **characterised in that**, corresponding to the speed of the members for separating into singles (2), the scraper (5) can be adjusted by means of the motor-driven control element (7) that is associated with the scraper (5) corresponding to the adjusting signals, on account of the stored corrections (15) between scraper position and speed of the members for separating into singles (2).

6. Monitoring device according to one or more of the preceding claims, **characterised in that** the seed material or the type of seed material to be discharged can be input into the monitoring device (12) via an input apparatus (14).

7. Monitoring device according to one or more of the preceding claims, **characterised in that** on account of the data stored in the memory, the evaluation program, in view of the signals detected by the sensor (9), recognises which type of seed material is being discharged or respectively recognises what the shape of the seed material is, and **in that**, corresponding to this determined data, the scraper (5) is adjustable by the control element (7) on account of the adjusting signals transmitted and the maximum speed of the member for separating into singles (2) is determined.

## Revendications

1. Installation de surveillance électronique pour la distribution de semence à l'aide d'un semoir mono-graine comportant des organes séparateurs avec des installations de raclage et des conduites de transport, de préférence pneumatiques reliant les organes séparateurs au dispositif de dépose de semence, dont au moins l'un des organes séparateurs comporte un capteur pour saisir les graines de semence séparées, le capteur coopère avec un programme d'exploitation enregistré dans la mémoire de l'installation de surveillance,
à l'aide du programme d'exploitation on détermine la qualité de séparation de l'organe séparateur, et au moins un capteur de vitesse de rotation (10) saisit la vitesse de rotation d'au moins l'un des organes séparateurs (2), et le capteur de vitesse de rotation (10) transmet les signaux de mesure à l'installation de surveillance (12),
**caractérisée en ce que**
l'installation de raclage (6) comporte au moins un élément de réglage motorisé (7) commandé par l'installation de surveillance (12), et
à l'aide de l'élément de réglage motorisé (7) l'installation de surveillance (12), permet de régler l'installation de raclage au début de l'opération de distribution, en fonction des relations (15) enregistrées dans la mémoire de l'installation de surveillance (18), relations entre la position de raclage et la vitesse de rotation, et en fonction de la vitesse de rotation actuelle obtenue de l'organe séparateur (2).

2. Installation de surveillance selon la revendication 1,
**caractérisée en ce que**
la mémoire d'installation de surveillance (12) contient des relations optimisées (15) entre la position de raclage et la vitesse de rotation des organes séparateurs (2) pour différentes graines de semence (type de semence) pour atteindre une qualité de séparation fixée (17).

3. Installation de surveillance selon la revendication 1,
**caractérisée en ce qu'**
après avoir déterminé la qualité de séparation effective (17) de l'organe séparateur (2) par le programme d'exploitation des relations (15) enregistrées dans la mémoire de l'installation de surveillance (12), entre la position de raclage et la vitesse de rotation de l'organe séparateur (2), on actualise en cas de dépassement d'une limite de tolérance fixée et à partir de la vitesse de rotation actualisée on corrige la position de raclage.

4. Installation de surveillance selon une ou plusieurs des revendications précédentes,
**caractérisée en ce que**
la mémoire contient l'enregistrement de la vitesse de rotation maximale autorisée des organes séparateurs (2) pour différentes semences (types de semence), et lorsqu'on atteint et/ou on dépasse la vitesse de rotation maximale enregistrée pour les organes séparateurs (2), une alarme se déclenche.

5. Installation de surveillance selon l'une ou plusieurs des revendications précédentes,
**caractérisée en ce qu'**
en fonction de la vitesse de rotation des organes séparateurs (2), on règle l'organe de raclage (5) en fonction des relations enregistrées (15) entre la position de raclage et la vitesse de rotation des organes séparateurs (2) à l'aide de l'élément de réglage motorisé (7) associé à l'organe de raclage (5), le réglage se faisant selon les signaux de réglage transmis.

6. Installation de surveillance selon l'une ou plusieurs des revendications précédentes,
**caractérisée en ce que**
par une installation d'entrée (14) on introduit dans l'installation de surveillance (12), la semence ou le type de semence à distribuer.

7. Installation de surveillance selon l'une ou plusieurs des revendications précédentes,
**caractérisée en ce qu'**
à partir des données enregistrées dans la mémoire, le programme d'exploitation s'appuyant sur les signaux transmis par le capteur (9), reconnaît le type de semence en cours de distribution ou la forme de graine de la semence, et en fonction des données transmises on règle l'organe de raclage (5) par l'élément de réglage (7) en s'appuyant sur les signaux de réglage transmis, et on détermine la vitesse de rotation maximale de l'organe séparateur (2).
